# EUROPÄISCHE PATENTSCHRIFT

(11) **EP 1 600 472 B1**
(45) Veröffentlichungstag und Bekanntmachung des Hinweises auf die Patenterteilung: **08.04.2009**
(21) Anmeldenummer: 05104160.6
(22) Anmeldetag: 18.05.2005
(51) Int. Cl.: C08K 5/5398, C08K 3/36, C08K 5/548

(54) **Verfahren zur Herstellung von Kautschukmischungen**
Process for manufacturing rubber blends
Procédé de production de mélanges de caoutchoucs

(30) Priorität: 26.05.2004 DE 102004026317
(43) Veröffentlichungstag der Anmeldung: 30.11.2005
(73) Patentinhaber: Rhein Chemie Rheinau GmbH, 68219 Mannheim (DE)
(72) Erfinder: Steger, Lothar, 81545, München (DE); Früh, Thomas, 67117, Limburgerhof (DE); Heiliger, Ludger, 67433, Neustadt (DE)
(74) Vertreter: Gille Hrabal Struck Neidlein Prop Roos

(56) Entgegenhaltungen:
- EP-A- 0 864 604
- WO-A-00/05301
- US-B1- 6 242 522
- EHOLZER U ET AL: "VERBESSERUNG DER REVERSIONSBESTAENDIGKEIT DURCH NACHVERNETZENDE BESCHLEUNIGUNGSSYSTEME. IMPROVEMENT OF REVERSION RESISTANCE WITH POST-CROSSLINKING ACCELERATOR SYSTEMS" KAUTSCHUK UND GUMMI - KUNSTSTOFFE, HUTHIG, HEIDELBERG, DE, Bd. 38, Nr. 8, 1985, Seiten 710-720, XP002070810 ISSN: 0948-3276
- VAN RAEPENBUSCH P. ET AL.: "On the Depending of Tire Performance and the Degree of Mixing" KAUTSCHUK GUMMI KUNSTSTOFFE, Bd. 56, Nr. 3, 2003, Seiten 110-113, XP001207026

## Beschreibung

Die vorliegende Erfindung betrifft ein Verfahren zur Herstellung von Kautschukmischungen, die nach dem Verfahren erhältlichen Kautschukmischungen, die Verwendung der Kautschukmischungen zur Herstellung von Luftreifen oder Halbfertigprodukten für Luftreifen sowie vernetzte Elastomerformtelle, die durch Vulkanisation der erfindungsgemäß hergestellten Kautschukmischungen erhalten werden.

Dithiophosphate sind seit langem als Vulkanisationsbeschleuniger für rußgefüllte Dienkautschuke bekannt (s. z.B. Helfried Ehrend, "Über die Wirkung von Thiophosphaten in Vernetzungssystemen von Dienkautschuke" Gummi, Asbest und Kunststoffe 1977, 30, 63-71 und EP 0832920 (Bridgestone). Die Verwendung der Dithiophosphate als Vulkanisationsbeschleuniger in aktivierte Kieselsäure enthaltenden Kautschukmischungen wird darin jedoch nicht beschrieben. Sämtliche Beispiele arbeiten mit ruß-gefüllten Kautschukmischungen.

Zwischen Ruß und Kieselsäure als Füllstoff in Kautschukmischungen bestehen deutliche Unterschiede, da helle Füllstoffe, wie Kieselsäure im Gegensatz zu Ruß dazu neigt in der Polymermatrix zu agglomerieren. Außerdem üben Ruß und Kieselsäure unterschiedliche Einflüsse auf ein gegebenes Vulkonisations-/Beschleunigersystem aus (s. z.B. S. Wolff et al. "Silica-Based Tread Compounds: Background and Performance, präsentiert auf der Tyretech Conference 1993).

Kieselsäure-gefüllte Reifenzusammensetzungen sind insbesondere deshalb interessant, weil sie zu einem verringerten Rollwiderstand führen, ohne dass die Haftung und Haltbarkeit der Reifen verschlechtert sind. Es resultiert ein geringerer Kraftstoffverbrauch.

Die WO 00/05301 (EP 1102812 B1 bzw. DE 69903563 T2 (Michelin)) beschreibt die Verwendung von Zinkdithiophosphaten in Kombination mit Guanidinderivaten als Kupplungsoktivatoren bei der Aktivierung von hellen Füllstoffen mit polysulfidhaltigen Alkoxysilanen um dadurch die Menge des verwendeten Alkoxysilans deutlich zu verringern. Die Verwendung der Guanidinderivate ist jedoch bei Anwesenheit natürlicher Kautschuke, die insbesondere bei der Herstellung von Winterreifen verwendet werden, nachteilig, da sie bei hohen Temperaturen zur Destobilisierung des Systems (Reversion, Kettenabbau) führen. Als Vulkanisationsbeschleuniger werden lediglich Sulfenamide verwendet. Eine Verwendung der Zinkdithiophosphate als Vulkanisationsbeschleuniger wird nicht offenbart.

Die Erfinder der vorliegenden Erfindung konnten nun überraschend zeigen, dass die Verwendung von Dithiophosphaten als Vulkanisationsbeschleuniger in Kombination mit mindestens einem weiteren Vulkanisationsbeschleuniger ausgewählt aus einer Sulfenamid-Verbindung oder einer Thiazol-Verbindung, zur Bildung äußerst reversionsstabiler Kieselsäure-haltiger vulkanisierter Kautschukmischungen führt. Das Verfahren eignet sich insbesondere für Lösungs-SBR (S-SBR)-holtige bzw. S-SBR/NRhaltige Kautschukmischungen. Gegenüber der EP 1102812 benötigt das Verfahren keinerlei Kupplungsaktivatoren bei der Füllstoffoktivierung, und insbesondere müssen keine Guanidinderivate mit ihrem besonders schädlichen Einfluß auf NR-haltige Kautschukmischungen verwendet werden. Das Verfahren der Erfindung eignet sich somit besonders für die Herstellung von reversionsstabilen NR-holtigen Kautschukmischungen, die für die Herstellung von Winterreifen geeignet sind. Weiterhin eignet sich das erfindungsgemäße Verfahren besonders für die Herstellung von S-SBR/BR-holtigen kieselsäurehaltigen Kautschukmischungen, die besonders als Sommerreifen geeignet sind.

Die vorliegende Erfindung betrifft somit ein Verfahren zur Herstellung einer Kautschukmischung, dass die folgenden Schritte umfasst:
a) Umsetzen mindestens eines Dienelastomers, mindestens eines verstärkenden hellen Füllstoffs und mindestens eines polysulfidhaltigen Alkoxysilans,
b) Mischen der erhaltenen Zusammensetzung mit mindestens einem Vulkanisationsmittel, mindestens einer Dithiophosphat-Verbindung und mindestens einem weiteren Vulkanisationsbeschleuniger ausgewählt aus einer Sulfenamid-Verbindung und einer Thiazol-Verbindung.

### Schritt a) (Füllstoffaktivierung bzw, Kupplung)

Im Schritt a) erfolgt die Aktivierung (Kupplung) des hellen Füllstoffs mit mindestens einem polysulfidhaltigen Alkoxysilan in Gegenwart des Dienelastomers.

### Heller Füllstoff

Ein heller Füllstoff im Sinne der Erfindung schließt einen verstärkenden Füllstoff ein.

Ein verstärkender Füllstoff im Sinne der Erfindung ist bevorzugt ein solcher der bei Zusatz von 10 bis 100 Gew.-% eine Erhöhung des Moduls von mindestens 100% bewirkt.

Erfindungsgemäß können ein oder mehrere helle verstärkende Füllstoffe verwendet werden, "Hell" im Sinne der Erfindung schließt insbesondere Ruß aus, Erfindungsgemäß ist es gleichwohl möglich, zusätzlich zu dem hellen Füllstoff Ruß zu verwenden, insbesondere Ruße vom Typ HAF, ISAF und SAF, die üblicherweise in Luftreifen und insbesondere in den Laufstreifen von Luftreifen eingesetzt werden. Als Beispiele für diese Ruße können N 115, N134, N234, N339, N347 und N375 genannt werden.

Der Anteil des hellen verstärkenden Füllstoffs beträgt jedoch mehr als 50 Gew.-%, vorzugsweise mehr als 80 Gew.-%, bezogen auf die Gesamtmenge des verwendeten verstärkenden Füllstoffs. Der Anteil von Ruß ist bevorzugt weniger als 50 Gew.-% und bevorzugter weniger als 20 Gew.-%. In einer besonderen Ausführungsform wird in dem erfindungsgemäßen Verfahren kein Ruß zugesetzt. Bei dem verstärkenden hellen Füllstoff handelt es sich vorzugsweise um Kieselsäure (SiO₂) oder Aluminiumoxid (Al₂O₃) oder Gemische davon. Bei der verwendeten Kieselsäure kann es sich um beliebige verstärkende Kieselsäuren handeln, die dem Fachmann bekannt sind, insbesondere beliebige Fällungskieselsäuren oder pyrogene Kieselsäuren mit einer BET-Oberfläche sowie einer mit CTAB bestimmten spezifischen Oberfläche, die beide unter 450 m²/g liegen, wobei jedoch hochdispergierbare Fällungskieselsäuren bevorzugt sind, insbesondere wenn die Erfindung zur Herstellung von Reifen mit einem geringen Rollwiderstand dient. Beispiele für bevorzugte hochdispergierbare Kieselsäuren schließen beispielsweise ein: Perkasil KS 430 (AKZO), BV 3380 und Ultrosil7000 (Degussa), Zeosil 1 1 65 MP und 1115 MP (Rhodia), Hi-Si1 2000 (PPG), Zeopol 8715, 8741 oder 8745 (Huber) und behandelte Fällungskieselsäuren wie beispielsweise mit Aluminium "dotierten" Kieselsäuren, die in der EP-A-0 735 088 beschrieben sind. Ein oder mehrere Kieselsäuretypen können verwendet werden. Aluminiumoxid ist ebenfalls ein hochdispergierbares Aluminiumoxid wie in der EP-A-0 810 258 beschrieben. Beispiele schließen ein: A125 oder CR125 (Baikowski), APA- 1 OORDX (Condea), Aluminiumoxid C (Degussa) und AKP-GO 15 (Sumitomo Chemicals). Der helle verstärkende Füllstoff kann in Form von Pulvern, Mikroperlen, Granulaten oder Kugeln vorliegen. In einer bevorzugten Ausführungsform werden Kieselsäuren und/ oder Aluminiumoxide verwendet. Besonders bevorzugt sind Kieselsäuren.

Der Gesamtgehalt an verstärkendem hellen Füllstoff (und gegebenenfalls Ruß) liegt vorzugsweise im Bereich von 20 bis 300 Gewichtsteilen, noch bevorzugter 30 bis 150 Gewichtsteilen und besonders bevorzugt 50 bis 130 Gewichtsteilen pro 100 Gewichtsteile des Dienelostomers, Die optimale Menge hängt ab von der Art des verwendeten hellen Füllstoffs und der gewünschten Anwendung. Ein Fahrradreifen erfordert einen geringeren Verstärkungsgrad als ein Luftreifen für Personenkraftwagen oder Nutzfahrzeuge wie Lastkraftwagen.

### Polvsulfidhaltiges Alkoxysilan (Kupplungsmittel)

Bei dem in den erfindungsgemäß verwendeten polysulfidhaltigen Alkoxysilan handelt es sich um ein sogenanntes Kupplungsmittel zur Einbindung des verstärkenden Füllstoffs in die Elastomermotrix (s. z.B. S. Wolff et al. "Silica-Based Tread Compounds: Background and Performance, präsentiert auf der Tyretech Conference 1993). Diese tragen, wie dem Fachmann bekannt ist, zwei Arten von funktionellen Gruppen, die Alkoxysilylgruppe, die an den hellen Füllstoff bindet, und die schwefelhaltige Gruppe, die an das Elastomer bindet.

Erfindungsgemäß können eine oder mehrere der polysulfidhaltigen Alkoxysilane in Kombination verwendet werden.

Die polysulfidhaltigen Alkoxysilane sind dem Fachmann als Kupplungsmittel (heller Füllstoff/ Dienelastomer) in Kautschukmischungen, die zur Herstellung von Luftreifen vorgesehen sind, bekannt; und es kann insbesondere auf die Patente US 38421 1 1 , US 3873489, US 3978103 und US 3997581, US 5580919, US 5583245, US 5663396, US 5684171, US 56841 72 und US 5696197 verwiesen werden.

Bevorzugt sind insbesondere symmetrische polysulfidhaltigen Alkoxysilane der folgenden Formel:

A-B-Sₙ-B-A

worin n eine ganze Zahl von 2 bis 8 ist; B eine zweiwertige, gegebenenfalls substituierte Kohlenwasserstoffgruppe ist, und A eine Gruppe der Formel

-Si(R¹)₃₋ₓ(R²)ₓ

worin x 1 bis 3 ist, und R¹ eine gegebenenfalls substituierte Alkylgruppe (bevorzugt mit 1 bis 20 Kohlenstoffatomen), eine Cycloalkylgruppe (bevorzugt mit 3 bis 20 Kohlenstoffatomen) oder eine Arylgruppe (bevorzugt mit 6 bis 20 Kohlenstoffatomen) ist, R² eine gegebenenfalls substituierte Alkoxygruppe (bevorzugt mit 1 bis 20 Kohlenstoffatomen) oder eine Cycloalkoxygruppe (bevorzugt mit 3 bis 20 Kohlenstoffatomen) ist.

n ist bevorzugt eine ganze Zahl von 2 bis 5. In handelsüblichen polysulfidhaltigen Alkoxysilonen liegt wie dem Fachmann bekannt ist, üblicherweise eine Mischung von polysulfidhaltigen Alkoxysilonen mit unterschiedlichen Werten "n" vor. Der Mittelwert für "n" in diesen Gemischen liegt im Bereich von 2 bis 6, bevorzugt 3 bis 5 und insbesondere bei etwa 4. In einer besonderen Ausführungsform kann der Wert für n auch 2 betragen.

Die vorstehend erwähnte zweiwertige, gegebenenfalls substituierte Kohlenwasserstoffgruppe B ist bevorzugt eine gesättigte oder ungesättigte Kohlenwasserstoffgruppe mit 1 bis 18 Kohlenstoffatomen, besonders bevorzugt eine C1-18-Alkylengruppe (bzw. Alkondiyl-Gruppe) oder C6-10 Arylengruppe geeignet, bevorzugter C1-C10-Alkylengruppen, insbesondere C2-C4-Alkylengruppen und besonders Propylen (Propan-1,3-diyl),

Die Gruppen R¹ sind vorzugsweise C1-C6-Alkylgruppen, Cyclohexyl oder Phenyl, insbesondere C1-C4-Alkylgruppen und besonders Methyl und/oder Ethyl.

Die Gruppen R² sind bevorzugt C1-C8-Alkoxygruppen oder C5-C8-Cycloolkoxygruppen und insbesondere Methoxy und/oder Ethoxy.

Hinsichtlich dieser polysulfidhaltigen Alkoxysilane sowie Verfahren zu ihrer Herstellung kann beispielsweise auf die US 56841 71 und US 5684172 verwiesen werden.

Das erfindungsgemäß verwendete polysulfidhaltige Alkoxysilan ist vorzugsweise ein Polysulfid, insbesondere ein Disulfid oder ein Tetrosulfid eines Bis(C1-C4)Alkoxy-[und gegebenenfalls (C1-C4)]alkyl]silylpropyls, noch bevorzugter Bis(C1-C4)-trialkoxysilylpropyl und insbesondere Bis(3-triethoxysilylpropyl) oder Bis(3-trimethoxysiiylpropyl), Das Disulfid von Bis(triethoxysilylpropyl)oder TESPD der Formel [(C₂H₅O)₃Si(CH₂)₃S]₂ ist beispielsweise von der Firma Degussa unter den Bezeichnungen Si266 oder Si75 (letzteres in Form eines Gemisches von Di-Sulfid (75 Gew.-%) und Polysulfid) oder auch von der Firma Witco unter der Bezeichnung Silquest Al589 im Handel erhältlich, Das Tetrasulfid von Bis(triethoxysilylpropyl) oder TESPT der Formel [(C₂H₅O)₃Si(CH₂)₃S₂]₂ ist beispielsweise von der Firma Degussa unter der Bezeichnung Si69 (oder X50S mit 50 Gew.-% Ruß als Träger) oder von der Firma Witco unter der Bezeichnung Silquest A1289 erhältlich (jeweils kommerzielles Gemisch mit einem Mittelwert von n von ungefähr vier 4). Erfindungsgemäß wird TESPT (S169) besonders bevorzugt verwendet. In den erfindungsgemäß hergestellten Kautschukmischungen kann der Gehalt des polysulfidhaltigen Alkoxysilans im Bereich von 0,5 bis 15 Gew.-%, bezogen auf das Gesamtgewicht des verstärkenden hellen Füllstoffs liegen, Erfindungsgemäß ist es auch möglich während der Füllstoffaktivierung zusätzlich mindestens einen Kupplungsoktivotor zu verwenden. Erfindungsgemäß ist dies jedoch weniger bevorzugt.

Das polysulfidhaltige Alkoxysilan kann vorab an das Dienelastomer über die schwefelhaltige funktionelle Gruppe gekuppelt werden, wobei die alkoxysilylhaltige Gruppe zur Kupplung an den hellen verstärkenden Füllstoff zurückbleibt. Das polysulfidhaltige Alkoxysilan kann auch über die alkoxysilylhaltige Gruppe vorab an den verstärkenden hellen Füllstoff gekoppelt werden, wobei der so vorgekuppelte Füllstoff dann über die sulfidhaltige Gruppe an das Dienelastomer gekuppelt werden kann. Aus Gründen der besseren Verarbeitbarkeit der Zusammensetzungen im unvulkanisierten Zustand wird das Kupplungsmittel jedoch vorzugsweise entweder an den verstärkenden hellen Füllstoff gebunden und dann, gebunden an den Füllstoff, mit dem Dienelastomer vermischt oder im nicht-umgesetzten Zustand mit dem Füllstoff und dem Dienelastomer vermischt.

Die Füllstoffoktivierung kann wie vorstehend dargelegt einstufig (Zusammengeben von Füllstoff, Dienelastomer und Alkoxysilan auf einmal) oder zweistufig (1. Zusammengeben von Alkoxysilan und Füllstoff oder Dienelastomer, bevorzugt Füllstoff und 2. Zugeben der noch fehlenden Komponente (Füllstoff oder Dienelastomer) verlaufen.

### Dienelastomer

Unter einem Dienelastomer werden zweckmäßig Elastomere verstanden, die Homopolymere oder Copolymere (aus zwei oder mehr Monomeren) sind, und Dienmonomere (Monomere, die zwei Kohlenstoff-Kohlenstoff-Doppelbindungen aufweisen, die konjugiert oder nicht konjugiert vorliegen) aufweisen. Derartige Dienelastomere schließen beispielsweise ein:
(a) Homopolymere, die durch Polymerisation eines konjugierten Dienmonomers mit 4 bis 1 2 Kohlenstoffatomen hergestellt werden;
(b) Copolymere, die durch Copolymerisation eines oder mehrerer konjugierter Diene miteinander und/oder mit einer oder mehreren aromatischen Vinylverbindungen mit 8 bis 20 Kohlenstoffatomen hergestellt werden;
(c) terndre Copolymere, die durch Copolymerisation von Ethylen, einem α-Olefin mit 3 bis 6 Kohlenstoffatomen und einem nicht konjugierten Dienmonomer mit 6 bis 12 Kohlenstoffatomen hergestellt sind, beispielsweise Elastomere, die ausgehend von Ethylen, Propylen und einem nicht konjugierten Dienmonomer vom vorgenannten Typ hergestellt werden, insbesondere 1 ,4-Hexadien, Norbornenethyliden und Dicyclopentadien;
(d) Copolymere von Isobuten und Isopren (Butylkautschuk), sowie halogenierte, insbesondere chlorierte oder bromierte Typen dieser Copolymere.

Grundsätzlich können erfindungsgemäß alle Arten von Dienelostomeren verwendet werden. Für die Anwendung bei Reifen bzw. Laufflöchen von Luftreifen sind jedoch im wesentlichen ungesättigte Dienelastomere, insbesondere Elastomere vom oben genannten Typ (a) oder (b) mit einem Gehalt an konjugierten Dieneinheiten von bevorzugt mindestens 50 mol-% besonders geeignet.

Von den konjugierten Dienen sind insbesondere 1,3-Butadien, 2-Methyl- 1 ,3-butadien, 2,3-Di(C1-C5-alkyl)-1,3-butadien, beispielsweise 2,3-Dimethyl-1 ,3-butadien, 2,3-Diethyl-1 ,3-butadien, 2-Methyl-3-ethyl-1,3-butadien und 2-Methyl-3-isopropyl- 1 ,3-butadien, Aryl-1,3-butadiene, 1 ,3-Pentadien und 2,4-Hexadien geeignet.

Von den aromatischen Vinylverbindungen eignen sich beispielsweise Styrol, ortho-, meta- und para-Methylstyrol, ein handelsübliches "Vinyltoluol"-Gemisch, para-t-Butylstyrol, Methoxystyrol, Chlorstyrol, Vinylmesitylen, Divinylbenzol und Vinyinaphtholin,

Die Copolymere können bevorzugt 99 bis 20 Gew.-% Dieneinheiten und 1 bis 80 Gew.-% vinylaromatische Einheiten enthalten, Die Elastomere können beliebige Mikrostrukturen aufweisen, die von den eingehaltenen Polymerisationsbedingungen abhängen, insbesondere der Gegenwart oder Abwesenheit eines Modifizierungsmiitels und/oder Randomisierungsmittels und den eingesetzten Mengen des Modifizierungsmittels und/oder Randomisierungsmittels, Die Elastomere können beispielsweise Blockpolymere, statistische Polymere, sequentielle Polymere oder mikrosequentielle Polymere sein; sie können in Dispersion oder in Lösung hergestellt werden; sie können mit einem Kupplungsmittel und/oder Pfropfungsmittel oder Mittel zur Funktionalisierung gekuppelt und/oder gepfropft bzw, sternförmig verzweigt oder funktionalisiert werden.

Bevorzugt sind: Polybutadiene, insbesondere Polybutadiene mit einem Gehalt an 1 ,2-verküpften Einheiten im Bereich von 4 bis 80 % oder Polybutadiene mit über 80 % cis-1,4-verknüpften Einheiten, Polyisoprene, Butodien-Styrol-Copolymere, bevorzugt Copolymere mit einem Styrolgehalt von 5 bis 50 Gew.-% bevorzugter 20 bis 40 %, bevorzugt mit einem Gehalt an Butadieneinheiten mit 1,2-Verknüpfungen im Bereich von 4 bis 65 % und bevorzugt einem Gehalt an trans-1,4-verküpften Bindungen im Bereich von 20 bis 80 %, Butadien-Isopren-Copolymere, bevorzugt Copolymere mit einem lsoprengehalt im Bereich von 5 bis 90 Gew.-% und einer Glosübergcingstemperotur (Tg) von -40 bis -80 "C und Isopren-Styrol-Copolymere, bevorzugt Copolymere mit einem Styrolgehalt von 5 bis 50 Gew.-% und einer Tg im Bereich von - 25 bis -50 "C.

Von den Butadien-Styrol-Isopren-Copolymeren sind insbesondere solche Copolymere geeignet, die einen Styrolgehalt von 5 bis 50 Gew.-% und insbesondere 10 bis 40 %, einen Isoprengehalt von 15 bis 60 Gew.-% und insbesondere 20 bis 50 %, einen Butadiengehalt von 5 bis 50 Gew.-% und insbesondere 20 bis 40 %, einen Gehalt an 1,2-verknüpften Butadieneinheiten von 4 bis 85 %, einen Gehalt an trans- 1,4-verknüpften Butadieneinheiten von 6 bis 80 %, einen Gehalt an 1,2- und 3,4-verknüpften Isopreneinheiten im Bereich von 5 bis 70 % und einem Gehalt an trans- 1,4-verknüpften Isopreneinheiten im Bereich von 10 bis 50 % aufweisen, und weiterhin beliebige Butadien-Styrol-Isopren-Copolymere mit einer Tg im Bereich von -20 bis -70 "C.

Das Dienelastomer wird vorzugsweise aus Polybutadienen (BR), Polyisoprenen (IR), Naturkautschuk (NR), Butadien-Styrol-Copolymeren (SBR), Butadien-Isopren-Copolymeren (BIR), Isopren-Styrol-Copolymeren (SIR), Butadien-Styrol-Isopren-Copolymeren (SBIR) oder den Gemischen von zwei oder mehreren dieser Verbindungen ausgewählt,

Besonders bevorzugt sind S-SBR, S-SBR/NR, S-SBR/NR/BR, S-SBR/BR.

Die erfindungsgemäß hergestellte Zusammensetzung ist vorzugsweise für Laufstreifen von Luftreifen vorgesehen; in diesem Fall ist das Dienelastomer vorzugsweise ein Butadien-Styrol-Copolymer (SBR), das gegebenenfalls im Gemisch mit Polybutadien (BR) und/oder Naturkautschuk (NR) verwendet wird.

Noch bevorzugter ist das Dienelastomer ein S-SBR (Solvent Styrene-Butadiene-Rubber), das in Lösung mit einem Styrolgehalt von 20 bis 30 Gew.-%, einem Gehalt an Vinylbindungen des Butadienanteils im Bereich von 15 bis 65 %, einem Gehalt an trans-1,4-Verknüpfungen im Bereich von 15 bis 75 % und einer Glasübergangstemperatur von -20 bis -55 "C hergestellt wird, wobei dieses Butadien-Styrol-Copolymer gegebenenfalls im Gemisch mit einem Polybutadien und/oder Naturkautschuk verwendet werden kann, wobei das Polybutadien vorzugsweise mehr als 90 % cis- 1,4-Verknüpfungen aufweisen kann.

Die erfindungsgemäß hergestellten Zusammensetzungen können ein oder mehrere Dienelastomere enthalten. Zusätzlich können beliebige synthetische Elastomere, die von Dienelastomeren verschieden sind, und Nicht-Elastomere sind, wie beispielsweise thermoplastische Polymere zugesetzt werden.

Die Füllstoffaktivierung gemäß Schritt a) des erfindungsgemäßen Verfahrens muss zweckmäßig bei erhöhter Temperatur durchgeführt werden. Erfindungsgemäß muss während des Schritts a) zu irgendeinem Zeitpunkt der Umsetzung der Komponenten eine Temperatur von zweckmäßig mindestens 130 °C erreicht werden um eine ausreichende Umsetzung (Füllstoffoktivierung) zu erzielen. Bevorzugt wird eine Temperatur von mindestens 140° C noch bevorzugter eine Temperatur von mindestens 150° C erreicht. Die Maximaltemperatur beträgt zweckmäßig etwa 160° C, bevorzugter etwa 170°C.

Die Temperatur wird dabei zweckmäßig durch geeignete Temperaturfühler im Mischer gemessen,

Der Schritt der Füllstoffaktivierung a) kann auch mehrstufig durchgeführt werden mit einem oder mehreren Schritten des Abkühlens zwischen dem Erwärmen,

Die Dauer der Füllstoffaktivierung hängt ab von der gewählten Temperatur, der Art der gewählten Komponenten und dem gewählten Mischertyp, Zweckmäßig erfolgt die Füllsloficktivierung im einstufigen Verfahren in einem Zeitraum von 30 Sekunden bis 30 Minuten.

Die Füllstoffoktivierung wird mit üblichen Mischern, wie z.B. Koutschukknetern durchgeführt.

### Schritt b) (Zugeben und Mischen des Vulkanisationsmittels sowie der Vulkanisationsbeschleuniger)

Nach Schritt a), der Füllstoffaktivierung, wird die im Schritt a) erhaltene Zusammensetzung abkühlen gelassen auf eine Temperatur, die ausreichend ist um eine Vulkanisation durch das Zugeben des Vulkanisationsmittels und der Vulkanisationsbeschleuniger im Schritt b) in nennenswertem Ausmaß zu vermeiden. Die Zusammensetzung muss nämlich nach dem Zugeben des Vulkanisationsmittels und der Vulkanisationsbeschleuniger noch formbar sein. Üblicherweise reicht dazu eine Temperatur von weniger als etwa 120 °C aus. Bevorzugt wird auf weniger als 100 °C, noch bevorzugter weniger als 80, noch bevorzugter weniger als 60°C abkühlen gelassen, bevor das Vulkanisationssystem, enthaltend das Vulkanisationsmittel und die Vulkanisationsbeschleuniger zugesetzt bzw. eingemischt werden. Das Einmischen erfolgt in an sich bekannter Weise, beispielsweise in einem üblichen Mischer, wie z.B. in einem Koutschukkneter,

Die Reihenfolge der Zugabe des Vulkanisationsmittels und der Vulkanisationsbeschleuniger ist an sich beliebig.

Die Mischdauer kann beispielsweise von 1 bis 30 Minuten, bevorzugt 3 bis 5 Minuten dauern,

Erfindungsgemäß können an sich beliebige Vulkanisationsmittel verwendet werden. Beispiele des Vulkanisationsmittels umfassen Schwefel und Schwefeldonotoren, die in einer Menge, bezogen auf Schwefel, von 0,5 bis 5,0 Gew.-Teilen, bevorzugt 1 bis 2 Gew.-Teilen, auf 100 Gew.-Teile des Dienelostomers zugegeben werden können. Wenn die Menge weniger als 0,5 Gew.-Teile beträgt, nehmen die Bruchfestigkeit und die Abriebbeständigkeit des vulkanisierten Gummis ab. Wenn die Menge 5 Gew.-Teile übersteigt, besteht die Neigung, dass sich die Elastizität des Gummis verschlechtert, Das bevorzugte Vulkonisierungsmittel stellt elementarer Schwefel dar. Geeignete Vulkonisierungsmittel sind beispielsweise im Kapitel 4. "Curing Agents" des Rubber Handbook, 9. Auflage, 1996 aufgeführt.

Im Schritt b) des erfindungsgemäßen Verfahrens wird mindestens eine Dithiophosphat-Verbindung als Vulkanisationsbeschleuniger zugesetzt. Dithiophosphat-Verbindung als Vulkanisationsbeschleuniger sind an sich aus ruß-gefüllten Systemen bekannt (z.B. Helfried Ehrend, "Über die Wirkung von Thiophosphaten in Vernetzungssystemen von Dienkautschuke" Gummi, Asbest und Kunststoffe 1977, 30, 68-71 und EP 0832920 (Bridgestone)). Erfindungsgemäß werden sie bevorzugt ausgewählt aus Verbindungen der Formel 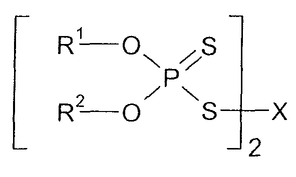 und 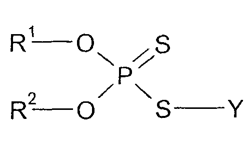 worin R¹ und R² jeweils unabhängig voneinander eine gegebenenfalls substituierte C1 bis C10-Alkylgruppe und/oder eine gegebenenfalls substituierte C6-C10-Arylgruppe sind, X ein zweiwertiger Rest und Y ein einwertiger Rest sind, die jeweils mindestens ein von Kohlenstoff verschiedenes Element aufweisen. Der in den oben gezeigten Formeln vorhandene Bindungsstrich zwischen dem S-Atom und den Resten X und Y kann eine kovalente bis ionische Bindung verkörpern. Bei der ionischen Bindung trägt das S-Atom eine negative Ladung.

Zweiwertige Rest X werden bevorzugt ausgewählt aus zweiwertigen Metallen, wie insbesondere Zn, Cu etc oder zweiwertigen Polysulfidresten -(S)_{y}-, worin y 1 bis 8, bevorzugt 2 bis 6 ist, und ein Durchschnittswert sein kann. Besonders bevorzugt sind zweiwertige Metalle, bei denen die Bindung zum S-Atom eher ionischen Charakter besitzt. Besonders bevorzugt ist Zink. Freie Koordinationsstellen am Metall können durch Lewis-Basen, wie Amine oder Ether, besetzt sein.

Einwertige Reste Y können einwertige Metalle (Metallionen) oder Ammoniumreste sein. Bevorzugt sind die einwertigen Reste Y Ammoniumreste, wie NH_{4-z}(R)_{z}⁺, worin R eine organische Gruppe ist, etc.

Bevorzugt ist die Dithiophosphate-Verbindung eine Zinkdithiophosphat-Verbindung (auch als "DPTZn" abgekürzt) der folgenden Formel: 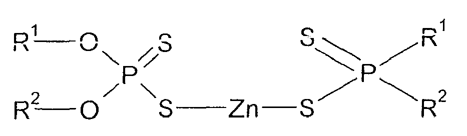 wobei in die Gruppen R¹ und R² gleich oder verschieden, bevorzugt gleich sind, und wie oben definiert sind. Bevorzugt sind die Gruppen R¹ und R² geradkettige oder verzweigte, substituierte oder unsubstituierte Alkylgruppen oder Cycloalkylgruppen mit bis zu 10 Kohlenstoffatomen, insbesondere C2- C8 Alkylgruppen oder C5-C10-Cycloalkylgruppen, Bevorzugte Alkylgruppen können insbesondere Ethyl, n-Propyl, Isopropyl, n-Butyl, Isobutyl und Cyclohexyl und vor allem die C2-C4-Alkylgruppen sein, Besonders bevorzugt ist R¹ und R² n-Propyl oder Isopropyl. Als Beispiele für die DTPZn können beispielsweise die Zinkdialkyldithiophosphate, die von der Firma Rhein-Chemie, (Deutschland) unter den Bezeichnungen Rhenocure TP/ G und TP/ S, das Produkt, das von der Firma Monsanto unter der Bezeichnung Vocol S (Dibutyldithio-Phosphat) im Handel ist, oder die Produkte genannt werden, die in der EP-A-0832920, EP-A-692 518 oder CA-A-2 153 509 beschrieben sind. Weitere geeignete Dithiophosphat-Verbindungen sind Kapitel 5, "Accelerators" des Rubber Handbook, 9. Auflage, 1996 aufgeführt,

Der Fachmann kann die optimale Menge der Dithiophosphai-Verbindung in Abhängigkeit von der gewünschten Anwendung, dem gewählten Dienelastomer, der Menge des Vulkanisationsmittels etc. auswählen. Bevorzugt beträgt die Menge 0,2 bis 5 Gew.-Teile, vorzugsweise 0,25 bis 3 Gew.-Teile, bevorzugter 0,5 bis 1,5 Gew.-Teile bezogen auf die 100 Gew.-Teile des Dienelastomers.

Erfindungsgemäß wird mindestens eine Sulfenamid-Verbindung und/oder Thiazol-Verbindung bevorzugt mindestens eine Sulfenamid-Verbindung in Kombination mit der Dithiophosphat-Verbindung als Vulkanisationsbeschleuniger verwendet. Derartige Sulfenamid-Verbindungen weisen üblicherweise das Strukturelement
-S-NR₂- auf, worin R Wasserstoff oder ein organischer Rest ist.

Bevorzugte Sulfenamide weisen die Struktur

R³-S-NR⁴₂

auf, worin R³ bevorzugt gegebenenfalls substituiertes Heteroaryl, bevorzugter benzokondensiertes Heteroaryl, besonders bevorzugt Benzothiazol ist und R⁴ Wasserstoff und/oder ein gegebenenfalls substituierter geradkettiger, verzweigter oder cyclischer, bevorzugt gesättigter Kohlenwasserstoffrest mit bis zu 1 2 Kohlenstoffatomen, bevorzugt ein verzweigter oder cyclischer Alkylrest mit bis zu 6 Kohlenstoffatomen, noch bevorzugter Cyclohexyl oder tert.-Butyl ist ist.

Bevorzugte Beispiele sind Sulfenamide, die einen Benzothiazolrest aufweisen, wie das CBS (N-Cyclohexyl-2-benzothiazolsulfenamid) der Formel 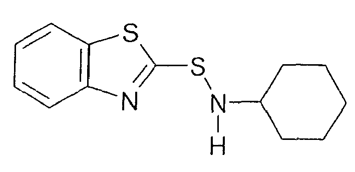 das DCBS (Di-N-cyclohexyl-2-benzofhiazolsulfenamid) der Formel 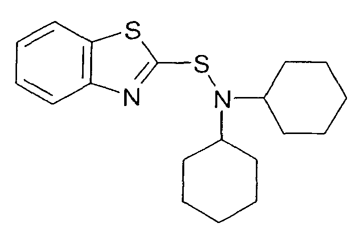 und das TBBS der Formel 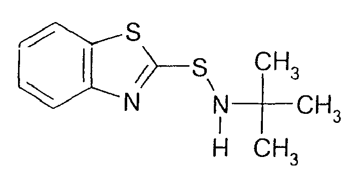 Geeignete Marktprodukte sind Kapitel 5. "Accelerators" des Rubber Handbook, 9. Auflage, 1996 aufgeführt. Die Menge der Sulfenamid-Verbindung, die in Kombination mit der Dithiophosphat-Verbindung verwendet wird, beträgt zweckmäßig 0,1 bis 4 Gew.-Teile, vorzugsweise 0,2 bis 3 Gew.-Teile, bevorzugter 0,5 bis 2 Gew.-Teile bezogen auf die 100 Gew.-Teile des Dienelastomers,

Die erfindungsgemäß erhaltenen Zusammensetzungen können weiterhin eine oder mehrere Benzothiazol-Verbindung als Vulkanisationsbeschleuniger zusätzlich zu dem Dithiophosphat enthalten. Benzothiazol-Verbindungen sind solche Verbindungen, die mindestens einen Benzothiazol-Rest aufweisen, der gegebenenfalls substituiert wein kann. Erfindungsgemäß soll der Begriff "Benzothiazol-Verbindungen" so zu verstehen sein, dass er keine Sulfenomid-Verbindungen gemäß vorstehender Definition einschließt, Sulfenamid-Verbindungen also vom Umfang der Benzothiazol-Verbindungen erfindungsgemäß ausgeschossen sind. Solche Benzothiazol-Verbindungen, die keine Sulfenomidgruppe -S-NR₂ aufweisen, sind z.B.; Mercaptobenzothiozole und Dibenzothiazolyldisulfide, und bevorzugte Beispiele umfassen alkylierte Mercaptobenzothiazole und Bis(alkylierte benzothiazolyl)disulfide, Spezifische Beispiele umfassen Mercaptobenzothiazol, 4-Methylmercaptobenzothiazol, 4-Ethylmercaptobenzothiazol, 2,2'-Dithiobismercaptobenzothiazol, 2,2'-Dithiobis(4-methylmercaptobenzothiazol), 2,2'-Dithiobis(4-ethylmercaptobenzothiazol), Ein bevorzugter Vertreter ist das MBTS, 2,2'-Dithiobis[benzothiazol], der Formel 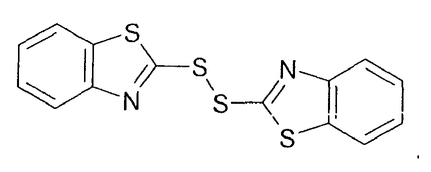 Weitere geeignete Marktprodukte sind Kapitel 5, "Accelerators" des Rubber Handbook, 9, Auflage, 1996 aufgeführt. Die Menge der Thiazol-Verbindung, die in Kombination mit der Dithiophosphat-Verbindung verwendet wird, beträgt zweckmäßig 0,1 bis 4 Gew.-Teile, vorzugsweise 0,2 bis 3 Gew.-Teile, bevorzugter 0,5 bis 2 Gew.-Teile bezogen auf die 100 Gew.-Teile des Dienelastomers.

Die erfindungsgemäß erhaltenen Zusammensetzungen enthalten bevorzugt eine Sulfenamid-Verbindung wie vorstehend definiert.

Die erfindungsgemäß erhaltenen Zusammensetzungen können weitere in mit Schwefel vernetzbaren Dienkautschukmischungen, die zur Herstellung von Luftreifen vorgesehen sind, üblicherweise verwendeten Bestandteile enthalten, wie Weichmacher, Pigmente, Schutzmittel, wie Antioxidantien und Antiozonantien, weitere Vernetzungssysteme auf der Basis von Peroxid und/oder Bismaleimiden, weitere Vulkanisationsbeschleuniger, Vulkanisationsaktivatoren, Strecköle und dergleichen. Der verstärkende helle Füllstoff kann mit einem herkömmlichen wenig oder nicht verstärkenden hellen Füllstoff kombiniert werden, beispielsweise Tonen, Bentonit, Talk, Kreide, Kaolin und Titandioxiden. Die erfindungsgemäß hergestellten Zusammensetzungen können weiterhin Mittel zum Beschichten des verstärkenden hellen Füllstoffs oder allgemein Hilfsmittel für die Herstellung enthalten, die durch eine Verbesserung der Dispersion des hellen Füllstoffs in der Kautschukmischung oder eine Erniedrigung der Viskosität der Zusammensetzungen in bekannter Weise ihre Verarbeitbarkeit im unvulkanisierten Zustand verbessern, wobei es sich beispielsweise um Alkylalkoxysilane (insbesondere Alkyltriethoxysilone), Polyole, Polyether (beispielsweise Polyethylenglykole), primäre, sekundäre oder tertiäre Amine, hydroxylierte oder hydrolysierbare Polyorganosiloxane, wie beispielsweise alpha,omega-Dihydroxypolydiorganosiloxone (insbesondere alpha,omega-Dihydroxypolydimethylsiloxane) handeln kann. Die erfindungsgemäß hergestellten Zusammensetzungen können ferner weitere Kupplungsmittel enthalten, die von den polysulfldhaltigen Alkoxysilonen verschieden sind. Derartige übliche Zusatzstoffe sind im Rubber Handbook, 9, Auflage, 1996 aufgeführt.

Die vorliegende Erfindung betrifft weiterhin die Kautschukmischung, die nach dem erfindungsgemäßen Verfahren erhältlich ist sowie die Verwendung der Kautschukmischung nach zur Herstellung von Luftreifen oder Halbfertigprodukten für Luftreifen, wie Laufstreifen, Unterschichten für Laufstreifen, Scheitellagen, Seitenprofile, Korkossenlogen, Reifenwülste, Protektoren, Schläuche oder Innenseiten für schlauchlose Reifen.

Die Erfindung betrifft weiterhin ein Verfahren zur Herstellung von vernetzten Elastomerformteilen, dass das Einbringen der erfindungsgemäß hergestellten Kautschukmischungen nach in eine Form und das anschließende Vulkanisieren der Kautschukmischung in der Form umfasst.

Die Vulkanisation wird in bekannter Weise bei einer Temperatur im allgemeinen von 130 bis 200 °C während einer ausreichenden Zeitspanne durchgeführt, die beispielsweise im Bereich von 5 bis 90 min liegen kann und insbesondere von der Vulkonisotionstemperatur, dem gewählten Vulkanisationssystem und der Kinetik der Vulkanisation der jeweiligen Zusammensetzung abhängt.

Die Erfindung betrifft weiterhin sowohl die oben beschriebenen erfindungsgemäß hergestellten Kautschukmischungen im Rohzustand (d.h. vor der Vulkanisation) als auch vulkanisiert (d.h. nach der Vernetzung oder Vulkanisation). Die erfindungsgemäß hergestellten Zusammensetzungen können selbstverständlich einzeln oder im Verschnitt mit beliebigen anderen zur Herstellung von Luftreifen verwendbaren Kautschukmischungen verwendet werden.

Die Erfindung betrifft daher weiterhin die Elastomerformteile, die durch Vulkanisation der erfindungsgemäß hergestellten Kautschukmischungen erhalten werden sowie die Verwendung mindestens einer Dithiophosphat-Verbindung als Vulkanisationsbeschleuniger für aktivierte helle Füllstoff enthaltende Kautschukmischungen.

### BEISPIELE

### Beispiele 1 und 2, Vergleichsbeispiel 1

Kautschukmischungen der Zusammensetzung gemäß Tabelle 1 wurden hergestellt:

**Tabelle 1**

| | **Beispiele** | | | | **Vergleichsbeispiel** | |
|---|---|---|---|---|---|---|
| | **1** | | **2*** | | **1** | |
| | phr⁻¹⁾ | **g** | Phr | **g** | phr | **g** |
| Buna VSL 5025-0 HM²⁾ | 100 | **700** | 100 | **700** | 100 | **700** |
| Ultrasil 7000³⁾ | 50 | **350** | 50 | **350** | 50 | **350** |
| Si-69⁴⁾ | 2,8 | **19,6** | 2,8 | **19,6** | 2,8 | **19,6** |
| Rhenogran TP-50⁵⁾ | 0 | **0** | 1 | **7** | 1 | |
| ZnO | 2,5 | **27,5** | 2,5 | **17,5** | 2,5 | **17,5** |
| Stearinsäure | 2 | **14** | 2 | **14** | 2 | **14** |
| 6PPD⁶⁾ | 1,9 | **13,3** | 1,9 | **13,9** | 1.9 | **13,9** |
| | | | | | | |
| DPG⁷⁾ | 1,5 | **10,5** | 1,5 | **10,5** | 1,5 | **10,5** |
| Schwefel | 1,1 | **7,7** | 1,1 | **7,7** | 1,1 | **7,7** |
| CBS⁸⁾ | 2 | **14** | 2 | **14** | 2 | **14** |
| Rhenogran TP-50⁵⁾ | 2 | **14** | 2 | **14** | 0 | **0** |

| | | | | | | |
|---|---|---|---|---|---|---|
| *: nicht-erfindungsgemäßes Beispiel 1) Alle Mengenangaben in "parts per hundred rubber" 2) S-SBR, Bayer AG 3) Kieselsäure; Degussa 4) [(C₂H₅O)₃Si(CH₂)₃S₂]₂ (TESPT) Degussa 5) Zink-di-n-butyl-dithiophosphat 50%-ig in EPDM/EVA blaues Granulat; Rhein Chemie Rheinau GmbH 6) N-(1,3-Dimethylbutyl)-N'-phenyl-p-phenylendiamin; Rhein Chemie Rheinau GmbH 7) Diphenylguanidin; Bayer AG 8) N-Cyclohexyl-2-benzothiazolsulfenamid; Bayer AG | | | | | | |

Das Mischen der Komponenten erfolgte wie folgt:
In einer ersten Vormischungsstufe wurden innerhalb von 3,5 Minuten bei einer Ausgangstemperatur von 100°C, Kautschuk, Kieselsäure, Alkoxysilan, Dithiophosphat (Vergleichsversuch), Zinkoxid als Vernetzungsaktivator, Stearinsäure als Aktivator für Zinkoxid und 6PPD (Alterungsschutzmittel, Rheinchemie) vermischt, Man ließ abkühlen und lagerte für 24 Stunden, Danach wurde das Material erneut bei einer Temperatur von 1 00°C für 1,5 Minuten gemischt und erneut abkühlen gelassen.

Diese beiden Mischungsstufen entsprechen Schritt a) gemäß der Erfindung.

In der dritten Stufe wurden dann die Vulkanisationsbeschleuniger und Schwefel während 1,75 Minuten bei 54°C vermischt (Auswurftemperatur 74 bis 80°C). Diese Mischungsstufe entspricht Schritt b) gemäß der Erfindung.

Die erhaltenen Mischungen wurden im Rheometer untersucht.

Die weiteren physikalischen Daten wurden an vulkanisierten Proben bestimmt, wobei die Vulkanisationsdauer in der Regel aus der Rheometerkurve aus T 90 x 1,5 bestimmt wurde,

Tabelle 2 zeigt die erhaltenen Ergebnisse:

**Tabelle 2**

| | **Beispiel 1** | **Beispiel 2** | **Vergleichsbeispiel 1** |
|---|---|---|---|
| Mischungsviskosität/ML 1+4 [ME]/100°C | 101 | 95 | 103 |
| | | | |
| MDR 160°C | | | |
| t10 [min] | 2,33 | 2,21 | 3,23 |
| t50 [min] | 4,10 | 3,70 | 6,08 |
| t90 [min) | 8,49 | 7,30 | 14,72 |
| Smax (Nm) | 26,16 | 27,10 | 25,11 |
| Smin [Nm] | 2,9 | 2,67 | 2,81 |
| | | | |
| Vulkanisation t-90 x 1,5 x 160°C | | | |
| Zugfestigkeit [MPa] | 15,60 | 15,66 | 16,76 |
| Bruchdehnung (D)[%] | 305 | 285 | 340 |
| Spannungswert bei 100 % Dehnung (S100) [MPa] | 3,03 | 3,41 | 3,00 |
| Spannungswert bei 200 % Dehnung (S300) [MPa] | 8,14 | 9,29 | 7,66 |
| Härte Shore A, 23 °C | 72 | 72 | 71 |
| Härte Shore A, 60 °C | 70 | 70 | 67 |
| Rückprallelastizität, 23 °C [%] | 13,8 | 13,6 | 14,2 |
| Rückprallelastizität, 60 °C [%] | 54 | 54 | 53 |

(Die Messungen wurden soweit vorhanden gemäß DIN/ISO-Methoden durchgeführt, insbesondere ISO 1382 (s. DIN-VDE-Taschenbuch Kautschuk und Elastomere 1, Beuth VDE Verlag 1985))

Die Ergebnisse zeigen in Beispiel 1 und 2 durch die Dithiophosphatanteile in der Fertigmischung sowohl in der Anvulkanisation (t-10-Wert) als auch in der Ausvulkanisation (t-90-Wert) eine beschleunigende Wirkung in der S-SBR-Mischung.

Der niedrige Mooney-Viskositätswert des Beispieles 2 ist ein Indikator für die kupplungsaktivierende Funktion des Dithiophosphates. Mit der Erhöhung des Silanisierungsgrades geht eine Senkung der Mischungsviskosotät (=Mooney-Viskosität) einher. Werden Dithiophosphate als Beschleuniger in der Fertigmischung gemäss Beispiel 1 und 2 eingesetzt, werden höhere Spannungswerte und Shore-Härten erreicht. Erkennbar ist auch die Beschleunigerfunktion der Dithiophosphate in der Absenkung des Zug-Dehnungsverhaltens gegenüber dem Vergleichsbeispiel.

### Beispiele 3 bis 6, Vergleichsbeispiel 1

Analog den Beispielen 1 und 2 wurden die in Tabelle 3 gezeigten Zusammensetzungen hergestellt und untersucht.

**Tabelle 3**

| | **Beispiel 3** | **Beispiel 4** | **Beispiel 5** | **Vergleichsbeispiel 2** |
|---|---|---|---|---|
| NR SMR 20²⁾ | 30,0 | 30,0 | 30,0 | 30,0 |
| BR Buna CB 24³⁾ | 40,0 | 40,0 | 40,0 | 40,0 |
| L-SBR Buna VSL 50250⁴⁾ | 30,0 | 30,0 | 30,0 | 30,0 |
| Ultrasil 7000 GR⁵⁾ | 80,0 | 80,0 | 80,0 | 80,0 |
| Si 69⁶⁾ | 7,5 | 7,5 | 7,5 | 7,5 |
| Statex N 115⁷⁾ | 10,0 | 10,0 | 10,0 | 10,0 |
| Stearinsäure | 2,0 | 2,0 | 2,0 | 2,0 |
| Zinkweiss RS (ZnO) | 3,0 | 3,0 | 3,0 | 3,0 |
| Aktiplast ST⁸⁾ | 4,0 | 4,0 | 4,0 | 4,0 |
| Antilux 654⁹⁾ | 2,0 | 2,0 | 2,0 | 2,0 |
| Vulkanox HS (TMQ)¹⁰⁾ | 2,0 | 2,0 | 2,0 | 2,0 |
| Vulkanox 4020 (6PPD) ¹¹⁾ | 2,0 | 2,0 | 2,0 | 2,0 |
| Viatec 500 (TDAEÖl)¹²⁾ | 8,0 | 8,0 | 8,0 | 8,0 |
| Schwefel | 2,0 | 2,0 | 2,0 | 2,0 |
| Vulkacit CZ (CBS)¹³⁾ | 2,0 | 2,0 | 2,0 | 2,0 |
| Rhenogron DPG-80¹⁴⁾ | -- | -- | -- | 2,0 |
| Rhenogran SDT-50¹⁵⁾ | -- | -- | -- | -- |
| Rhenogron TP-50¹⁶⁾ | 2,0 | | -- | -- |
| Rhenogran ZBOP50¹⁷⁾ | -- | 2,0 | -- | -- |
| Rhenogron ZDT-50¹⁸⁾ | -- | -- | 2,0 | -- |

| | | | | |
|---|---|---|---|---|
| 1) Alle Mengenangaben in "parts per hundred rubber" 2) Naturkautschuk SMR 20 (SMR = Qualitätsstandard "Standard Malaysian Rubber") 3) Butadien Kautschuk, Bayer AG 4) SBR - Solution Vinyl-Butadiene-Styrene Rubber, Bayer AG 5) Kieselsäure; Degussa 6) [(C₂H₅O)₃Si(CH₂)₃S₂]₂ (TESPT) Degussa 7) Ruß, Columbian Chemicals 8) Gemisch von Kohlenwasserstoffen, Zn-Seifen und Füllstoffen, Rheinchemie 9) Paraffine und Mikrowachse mit mittlerer Molekulargewichtsverteilung, Rheinchemie 10) Alterungsschutzmittel TMQ (Vulkanox HS), Bayer 11) Alterungsschutzmittel 6PPD (Vulkanox 4020), Bayer 12) TDAE (Treated Destillate Aromatic Extract)-Öl 13) N-Cyclohexyl-2-benzothiazolsulfenamid; Bayer AG 14) N,N'-Diphenylguanidin in EPDM/EVA (80 %-ig) 15) Phosphorylpolysulfid in EPDM/EVA (50 %-ig), Rhein Chemie Rheinau GmbH 16) Zinkdialkyldithiophosphate in EPDM/EVA (50 %-ig) blaues Granulat, Rhein Chemie Rheinau GmbH 17) Zinkdialkyldithiophosphate in EPDM/EVA (50 %-ig) beiges Granulat, Rhein Chemie Rheinau GmbH 18) Zinkdialkyldithiophosphate in EPDM/EVA (50 %-ig) beiges Granulat, Rhein Chemie Rheinau GmbH | | | | |

Tabelle 4 zeigt die Ergebnisse:

**Tabelle 4**

| | | Beispiel 3 | Beispiel 4 | Beispiel 5 | Vergleichs-Beispiel 2 |
|---|---|---|---|---|---|
| **Mooney-Viskosität 100°C** | ME | 79 | 80 | 81 | 76 |
| **MDR 2000** | 190°C | | | | |
| t-90 | min | 1,14 | 1,24 | 1,29 | 1,04 |
| Smax | Nm | 26,12 | 26,69 | 26,65 | 26,79 |
| Smin | Nm | 2,78 | 2,78 | 3,11 | 2,28 |
| Reversion 190°C | % | 93,7 | 96,8 | 98,3 | 84,4 |
| Reversion 170°C | % | 95 | 99,5 | 97,6 | 86,4 |
| (Drehmoment nach 30 min in %) | | | | | |
| **Vulkanisation t-90 x 1,5 / 170°C** | | | | | |
| Zugfestigkeit | Mpa | 16,9 | 17,9 | 16,8 | 18,9 |
| Bruchdehnung | % | 256 | 269 | 259 | 297 |
| Spannungswert bei 100% Dehnung | Mpa | 4,5 | 4,4 | 4,2 | 4,2 |
| Spannungswert bei 200% Dehnung | MPa | 12,3 | 12,2 | 11,8 | 11,5 |
| Härte 23°C | Shore A | 72,5 | 73 | 72,1 | 72,9 |
| Härte 70°C | Shore A | 69,9 | 70,2 | 69,5 | 70,5 |
| Rückprallelastizität 23°C | % | 47,2 | 47,4 | 47,2 | 46,2 |
| Rückprallelastizität 70°C | % | 63,5 | 63,1 | 63 | 61,7 |
| Abrieb | mm3 | 111 | 118 | 113 | 111 |
| **Flexometerprüfung/Goodrich** | | | | | |
| Bleibende Verformung | % | 2,6 | 2,5 | 2,6 | 5,1 |
| Fliessen | % | 0,5 | 0,5 | 0,5 | 2,9 |
| delta T nach 25min | °C | 35,5 | 36,1 | 35,6 | 38 |
| Einstichtemperatur | °C | 142 | 143 | 143 | 150 |
| **Dynamische Eigenschaften / 10 Hz** | | | | | |
| E' 70°C | Mpa | 5,43 | 5,57 | 4,52 | 5,48 |
| E" 70°C | MPa | 0,45 | 0,44 | 0,39 | 0,45 |
| tan-d 70°C | | 0,083 | 0,079 1 | 0,086 4 | 0,0817 |
| E' 23°C | Mpa | 9,74 | 9,79 | 7,64 | 8,64 |
| E" 23°C | MPa | 1,32 | 1,25 | 1,04 | 1,09 |
| tan-d 23°C | | 0,136 | 0,129 | 0,136 | 0,127 |
| E'0°C | Mpa | 14,3 | 14,2 | 10,3 | 12,6 |
| E" 0°C | MPa | 2,73 | 2,59 | 2,02 | 2,35 |
| tan-d 0°C | | 0,192 | 0,183 | 0,195 | 0,187 |

(Die Messungen wurden soweit vorhanden gemäß DIN/ISO-Methoden durchgeführt, insbesondere ISO 1382 (s. DIN-VDE-Taschenbuch Kautschuk und Elastomere 1, Beuth VDE Verlag 1985))

Tabelle 4 zeigt Folgendes:
Mit Dithiophosphaten als Beschleuniger lassen sich reversionsstabilere NR-haltige kieselsäurehaltige Mischungen (Reversionsindex bei 170 und 190°C) gegenüber dem Standard (Vergleichsbeispiel 2 mit DPG) herstellen, Mit Dithiophosphaten lassen sich thermisch stabilere Mischungen (Heat buildup/Goodrich Flexometer) gegenüber dem Standard herstellen, Dithiophosphate verbessern das Nassrutschverholten gegenüber dem Standard (Indikator höhere tan-d Werte bei 0°C). Dithiophosphate zeigen eine höhere Elastizität gegenüber dem Standard (Indikator für Reifenkomfort). Härte, Abrieb und Rollwiderstand (Indikator tan-d 70°C) werden gegenüber dem Standard durch Dithiophosphate nicht verändert. Das Zug/Dehnungsverhalten wird durch Dithiophosphate gegenüber dem Standard verschlechtert.

## Patentansprüche

1. Verfahren zur Herstellung einer Kautschukmischung, dass umfasst:
a) Umsetzen mindestens eines Dienelastomers, mindestens eines verstärkenden hellen Füllstoffs und mindestens eines polysulfidhaltigen Alkoxysilans,
b) Mischen der erhaltenen Zusammensetzung mit mindestens einem Vulkanisationsmittel, mindestens einer Dithiophosphat-Verbindung und mindestens einem weiteren Vulkanisationsbeschleuniger ausgewählt aus einer Sulfenamid-Verbindung und einer Thiazol-Verbindung, wobei die mindestens eine Dithiophosphat-Verbindung zur in Verfahrensschritt b) zugegeben wird.

2. Verfahren nach Anspruch 1 , worin das Dienelastomer mindestens ein Lösungs-SBR umfasst.

3. Verfahren nach einem Ansprüche 1 oder 2, worin der helle verstärkende Füllstoff mindestens eine Kieselsäure umfasst.

4. Verfahren nach einem der Ansprüche 1 bis 3, worin das polysulfidhaltige Alkoxysilan mindestens ein Bisalkoxysilylalkylpolysulfid umfasst.

5. Verfahren nach einem der Ansprüche 1 bis 4, worin das Vulkanisationsmittel Schwefel umfasst.

6. Verfahren nach einem der Ansprüche 1 bis 5, worin die Dithiophosphat-Verbindung ausgewählt wird aus Verbindungen der Formel 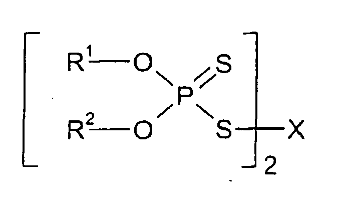 und 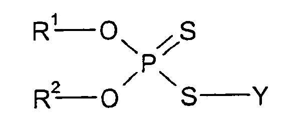 worin R¹ und R² jeweils unabhängig voneinander eine gegebenenfalls substituierte C1 bis C10-Alkylgruppe und/oder eine gegebenenfalls substituierte C6-C10-Arylgruppe sind, X ein zweiwertiger Rest und Y ein einwertiger Rest sind, die jeweils mindestens ein von Kohlenstoff verschiedenes Element aufweisen.

7. Verfahren nach Anspruch 6, worin X Zn ist.

8. Verfahren nach einem der Ansprüche 1 bis 7, worin der weitere Vulkanisationsbeschleuniger eine Sulfenamid-Verbindung ist.

9. Verfahren nach einem der Ansprüche 1 bis 8, worin die Sulfenamid-Verbindung Cyclohexylbenzothiazolsulfenamid (CBS), Butylbenzothiazolsulfenamid (TBBS) und/oder Dicyclohexylbenzothiazolsulfenamid (DCBS) ist.

10. Kautschukmischung erhältlich nach dem Verfahren nach einem der Ansprüche 1 bis 9.

11. Verwendung der Kautschukmischung nach Anspruch 10 zur Herstellung von Luftreifen oder Halbfertigprodukten für Luftreifen.

12. Verfahren zur Herstellung von vernetzten Elastomerformteilen, dass das Einbringen der Kautschukmischung nach Anspruch 10 in eine Form und das anschließende Vulkanisieren der Kautschukmischung in der Form umfasst.

13. Elastomerformteil, erhältlich nach dem Verfahren nach Anspruch 12.

14. Verwendung mindestens einer Dithiophosphat-Verbindung als Vulkanisationsbeschleuniger für aktivierte helle Füllstoff enthaltende Kautschukmischungen.

15. Verwendung nach, Anspruch 14, worin der helle Füllstoff mit mindestens einem polysulfidhaltigen Alkoxysilan aktiviert ist,

## Claims

1. Process for producing a rubber mixture that comprises:
a) reacting at least one diene elastomer, at least one light-coloured reinforcing filler and at least one polysulphide-containing alkoxysilane,
b) mixing the composition obtained with at least one vulcanising agent, at least one dithiophosphate compound and at least one further vulcanisation accelerator selected from a sulphenamide compound and a thiazole compound, wherein the at least one dithiophosphate compound is added only in process step b).

2. Process according to claim 1 , wherein the diene elastomer comprises at least one solution SBR.

3. Process according to either claim 1 or claim 2, wherein the light-coloured reinforcing filler comprises at least one silica.

4. Process according to any one of claims 1 to 3, wherein the polysulphide-containing alkoxysilane comprises at least one bisalkoxysilyl alkyl polysulphide.

5. Process according to any one of claims 1 to 4, wherein the vulcanising agent comprises sulphur.

6. Process according to any one of claims 1 to 5, wherein the dithiophosphate compound is selected from compounds of formula 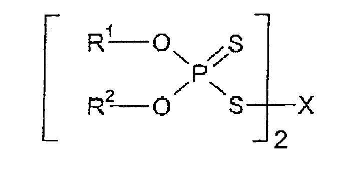 and 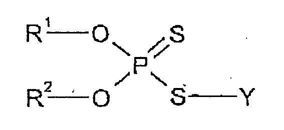 wherein R¹ and R², respectively independently of each other are an optionally substituted C₁ to C₁₀ alkyl group and/or an optionally substituted C₆ to C₁₀ aryl group, X is a bifunctional radical and Y a monofunctional radical which each comprise at least one element that is different from carbon.

7. Process according to claim 6, wherein X is Zn.

8. Process according to any one of claims 1 to 7, wherein the additional vulcanisation accelerator is a sulphenamide compound.

9. Process according to any one of claims 1 to 8, wherein the sulphenamide compound is cyclohexyl benzothiazole sulphenamide (CBS), butylbenzothiazole sulphenamide (TBBS) and/or dicyclohexyl benzothiazole sulphenamide (DCBS).

10. Rubber mixture obtainable by the process according to any one of claims 1 to 9.

11. Use of the rubber mixture according to claim 10 for producing tyres or semi-finished products for tyres.

12. Process for producing crosslinked elastomer moulded articles, that comprises the introduction of the rubber mixture according to claim 10 into a mould and the subsequent vulcanisation of the rubber mixture in the mould.

13. Elastomer moulded article obtainable by the process according to claim 12.

14. Use of at least one dithiophospate compound as a vulcanisation accelerator for activated light-coloured filler-containing rubber mixtures.

15. Use according to claim 14, wherein the light-coloured filler is activated with at least one polysulphide-containing alkoxysilane.

## Revendications

1. Procédé pour la préparation d'une composition de caoutchouc, qui comprend :
a) la mise en réaction d'au moins un élastomère diène, d'au moins une charge claire de renforcement et d'au moins un alcoxysilane contenant un polysulfure,
b) le mélange de la composition obtenue avec au moins un agent de vulcanisation, au moins un composé dithiophosphate et au moins un autre accélérateur de vulcanisation choisi parmi un composé sulfénamide et un composé thiazole, ledit au moins un composé dithiophosphate étant ajouté seulement dans l'étape b) du procédé.

2. Procédé selon la revendication 1, dans lequel l'élastomère diène comprend au moins un SBR en solution.

3. Procédé selon la revendication 1 ou 2, dans lequel la charge claire de renforcement comprend au moins un acide silicique.

4. Procédé selon l'une quelconque des revendications 1 à 3, dans lequel l'alcoxysilane contenant un polysulfure comprend au moins un bisalcoxysilylalkylpolysulfure.

5. Procédé selon l'une quelconque des revendications 1 à 4, dans lequel l'agent de vulcanisation comprend du soufre.

6. Procédé selon l'une quelconque des revendications 1 à 5, dans lequel le composé dithiophosphate est choisi parmi des composés de formules 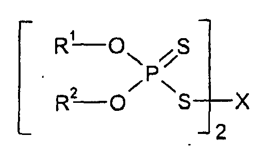 et 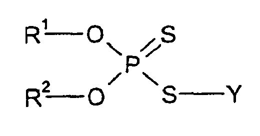 dans lesquelles R¹ et R² représentent chacun, indépendamment l'un de l'autre, un groupe alkyle en C₁-C₁₀ éventuellement substitué et/ou un groupe aryle en C₆-C₁₀ éventuellement substitué, X est un radical divalent et Y est un radical monovalent, qui comportent chacun au moins un élément différent du carbone.

7. Procédé selon la revendication 6, dans lequel X est Zn.

8. Procédé selon l'une quelconque des revendications 1 à 7, dans lequel l'autre accélérateur de vulcanisation est un composé sulfénamide.

9. Procédé selon l'une quelconque des revendications 1 à 8, dans lequel le composé sulfénamide est le cyclohexylbenzothiazole-sulfénamide (CBS), le butylbenzothiazole-sulfénamide (TBBS) et/ou le dicyclohexylbenzothiazolesulfénamide (DCBS).

10. Composition de caoutchouc pouvant être obtenue conformément au procédé selon l'une quelconque des revendications 1 à 9.

11. Utilisation de la composition de caoutchouc selon la revendication 10, pour la fabrication des pneumatiques à air ou de produits semi-finis pour des pneumatiques à air.

12. Procédé pour la fabrication de pièces moulées en élastomère réticulées, comprenant l'introduction dans un moule de la composition de caoutchouc selon la revendication 10 et la vulcanisation subséquente de la composition de caoutchouc dans le moule.

13. Pièce moulée en élastomère, pouvant être obtenue conformément au procédé selon la revendication 12.

14. Utilisation d'au moins un composé dithiophosphate en tant qu'accélérateur de vulcanisation pour des compositions de caoutchouc contenant une charge claire activée.

15. Utilisation selon la revendication 14, dans laquelle la charge claire est activée avec au moins un alcoxysilane contenant un polysulfure.
